# EUROPEAN PATENT APPLICATION

(11) **EP 1 617 188 A1**
(43) Date of publication of application: **18.01.2006**
(21) Application number: 04425516.4
(22) Date of filing: 13.07.2004
(51) Int. Cl.: G01F 23/56, F17C 13/02, F16K 37/00

(54) **Valve with integrated level indicator**

(71) Applicant: Cavagna Group S.p.A., 25010 Ponte S. Marco (Prov. of Brescia) (IT)
(72) Inventor: Cavagna, Ezio, 25100 Brescia (IT)
(74) Representative: Forattini, Amelia

(57) **Abstract**

A valve with integrated level indicator, particularly for bottles containing liquefied gases, has a valve body (2) provided with a threaded shank (3) and with a level indicator (4), an upper seat that accommodates a valve system that has a spring (6) and a spring pressing and piston guiding component (7), and a lateral seat for a cartridge (8) of a safety valve. The spring pressing and piston guiding component (7) is elongated and supports the float assembly (9).

## Description

The present invention relates to a valve with integrated level indicator, particularly for bottles containing liquefied gases.

A conventional type of valve for bottles containing gases, provided with a gas level indicator, has a type G59 coupling, according to the EN12864 standard, and includes a threaded shank provided on one side with a support for a float.

The support also acts as a guide for a metallic rod that operates a magnet that acts on the pointer of an indicator arranged laterally on the valve body.

This type of valve with level indicator operates excellently, but a manufacturing problem has been observed in the case of valves with a threaded coupling having a modest diameter: when the diameter of the shank is small, there is no space to apply the support of the float and any rod for transmitting the motion of the float would interfere with the internal components.

The aim of the present invention is to provide a valve with integrated level indicator, particularly for bottles containing liquefied gases, that overcomes the drawbacks of the cited prior art.

An object of the invention is to provide a valve with integrated level indicator that can be applied to bottles having a small-diameter coupling ring.

A further object of the invention is to provide a valve that is constituted by a limited number of components.

A further object is to provide a valve that can be manufactured with materials and machines that are already available in the field.

This aim and these and other objects that will become better apparent hereinafter are achieved by a valve with integrated level indicator, particularly for bottles containing liquefied gases, comprising a valve body provided with a threaded shank and with a level indicator, the valve body comprising an upper seat, which at least partially accommodates a valve system that in turn comprises a spring and a piston, the valve body laterally comprising a seat for a cartridge of a safety valve, characterized in that it can be replaced when the bottle is empty and in that it is a coupling for fixing the part for containing the internal components; the spring pressing and piston guiding component being elongated and supporting a float assembly.

Further characteristics and advantages of the present invention will become better apparent from the following detailed description of preferred but not exclusive embodiments thereof, illustrated by way of nonlimiting example in the accompanying drawings, wherein:

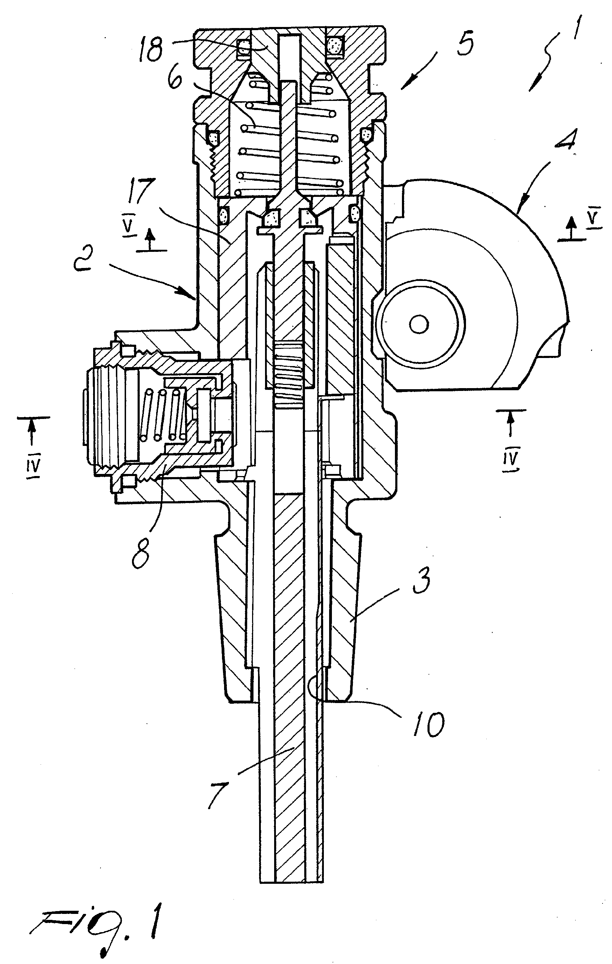

Figure 1 is a sectional elevation view, taken along a longitudinal plane, of a valve according to the invention;

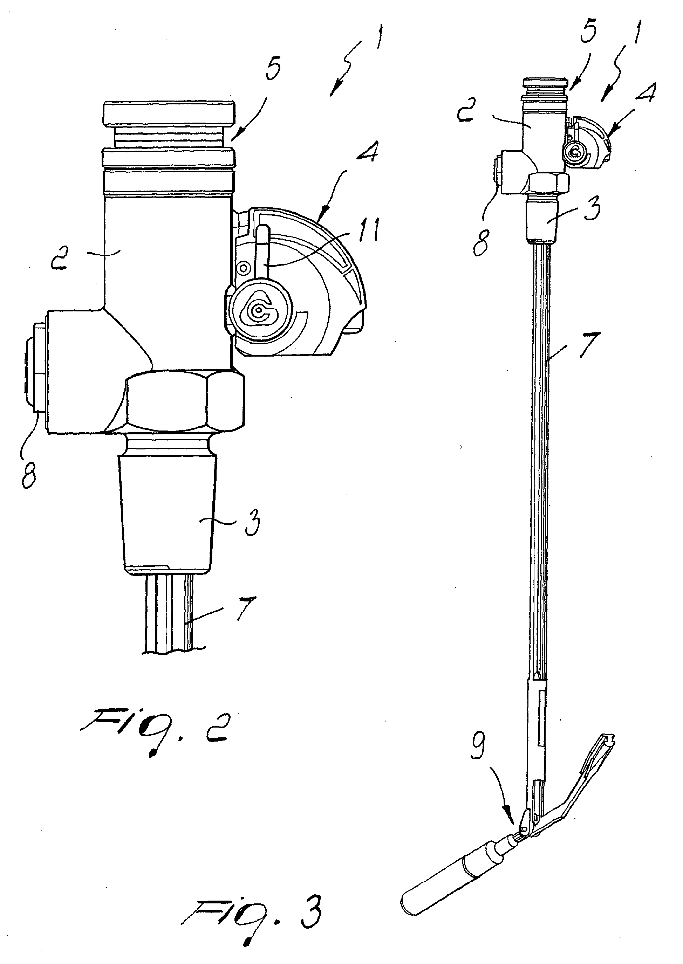

Figure 2 is an elevation view of the valve of Figure 1;
Figure 3 is an elevation view of the valve complete with the float support and with the float;

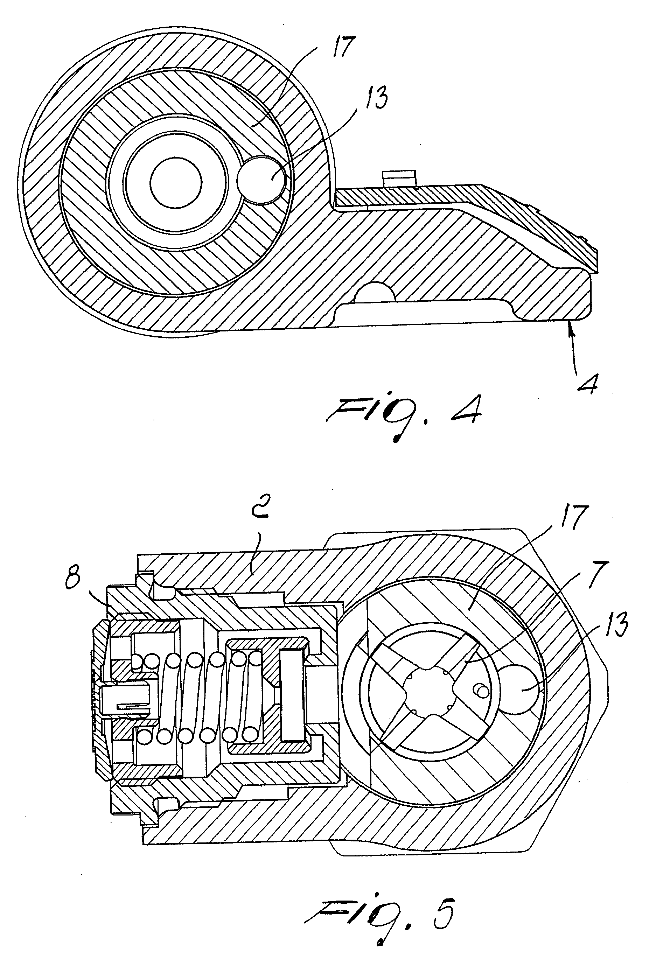

Figure 4 is a sectional view, taken along the line IV-IV of Figure 1;

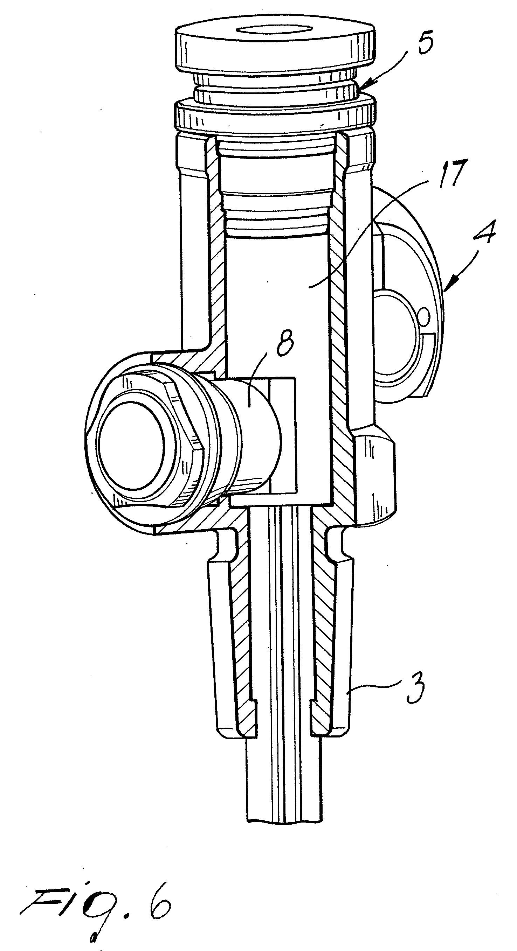

Figure 5 is a sectional view, taken along the line V-V of Figure 1;
Figure 6 is a partially sectional perspective view of the valve according to the invention;

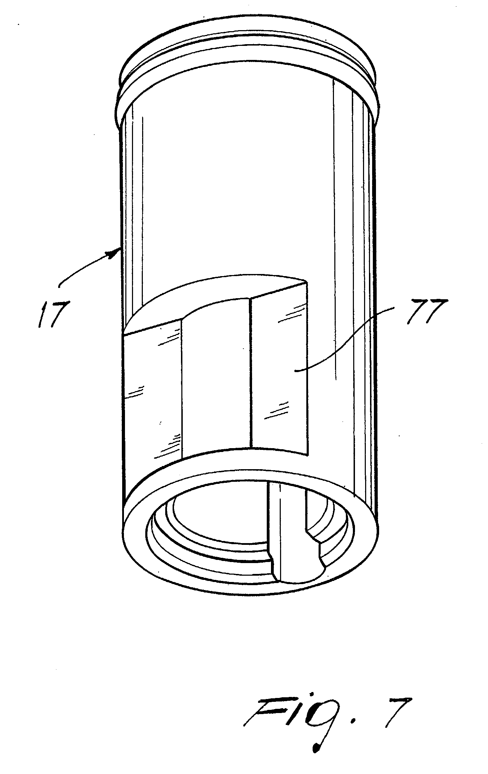

Figure 7 is a perspective view of the spring pressing and piston guiding component.

With reference to the cited figures, a valve according to the invention, generally designated by the reference numeral 1, has a valve body 2, which is provided with a threaded shank 3 and with a level indicator 4.

The valve body 2 has an upper seat, which internally accommodates a valve system 5, which in turn includes a spring 6, which acts in contrast with a first seal piston 18 and with a casing 17 for a spring pressing and piston guiding component 7.

The body 2 laterally comprises a seat for a cartridge 8 of a safety valve.

According to the invention, the spring pressing and piston guiding component 7 is elongated and supports a float assembly 9.

The spring pressing and piston guiding component 7 has the shape of a cross, viewed in cross-section, and contains a rod 10 that actuates a magnet that acts on the pointer 11 of the indicator 4.

A characteristic of the valve according to the invention is that the casing 17 is blocked in a lower region by the cartridge 8 of the safety valve.

For this purpose, the casing 17 has a lateral recess 77 in which it is possible to insert the internal end of the cartridge 8.

The casing 17 has a longitudinal seat 13, which runs substantially along a directrix of the internal surface of the casing and accommodates the rod 10.

In practice it has been found that the invention achieves the intended aim and objects, providing a valve with integrated level indicator that can be applied to bottles having a small-diameter coupling.

The valve according to the invention is susceptible of numerous modifications and variations, within the scope of the appended claims. All the details may be replaced with technically equivalent elements.

The materials used, as well as the dimensions, may be any according to requirements and to the state of the art.

## Claims

1. A valve with integrated level indicator, particularly for bottles containing liquefied gases, comprising a valve body (2) provided with a threaded shank (3) and with a level indicator (4), said valve body (2) comprising an upper seat, which at least partially accommodates a valve system that in turn comprises a spring (6), a first sealing piston (11), and a spring pressing and piston guiding component (7); said valve body comprising laterally a seat for a cartridge (8) of a safety valve, **characterized in that** it can be replaced when the bottle is empty and **in that** it is a coupling for fixing the part for containing the internal components; said spring pressing and piston guiding component (7) being elongated and supporting a float assembly (9).

2. The valve according to claim 1, **characterized in that** said spring pressing and piston guiding component (7) has the shape of a cross, viewed in cross-section, and contains a rod (10) that actuates a magnet that acts on the pointer of said indicator (4).

3. The valve according to claim 1 or 2, **characterized in that** said spring pressing and piston guiding component (7) is blocked in a lower region by said cartridge (8) of the safety valve.

4. The valve according to one or more of the preceding claims, **characterized in that** said spring (6) of said valve system acts in contrast with said piston for a first seat (11) and with a casing (17) for containing said spring pressing and piston guiding component (7).

5. The valve according to one or more of the preceding claims, **characterized in that** said spring pressing and piston guiding component (7) has a cross-like cross-section and contains a rod (10) that actuates a magnet that acts on the pointer (11) of said indicator (4).

6. The valve according to one or more of the preceding claims, **characterized in that** said casing (17) is blocked in a lower region by said cartridge (8) of the safety valve.

7. The valve according to one or more of the preceding claims, **characterized in that** said casing (17) has a lateral recess (77) in which it is possible to insert the inner end of the cartridge (8).

8. The valve according to one or more of the preceding claims, **characterized in that** said casing (17) comprises a longitudinal seat (13) that lies substantially along a directrix of the internal surface of said casing and accommodates said rod (10).
